# EUROPEAN PATENT SPECIFICATION

(11) **EP 2 074 313 B1**
(45) Date of publication and mention of the grant of the patent: **09.07.2014**
(21) Application number: 06851136.9
(22) Date of filing: 12.10.2006
(51) Int. Cl.: F01D 17/14, F02K 3/02, F02K 3/06, F02C 9/18, F02K 1/12

(54) **FAN VARIABLE AREA NOZZLE WITH ELECTROMECHANICAL ACTUATOR**
DÜSE EINES FANTRIEBWERKS MIT VERÄNDERLICHEM QUERSCHNITT UND ELEKTROMECHANISCHEM STELLANTRIEB
TUYÈRE À SECTION VARIABLE À SOUFFLANTE AVEC ACTIONNEUR ÉLECTROMÉCANIQUE

(43) Date of publication of application: 01.07.2009
(73) Proprietor: United Technologies Corporation, Hartford, Connecticut 06101 (US)
(72) Inventor: CHAUDHRY, Zaffir, South Glastonbury, CT 06073 (US)
(74) Representative: Leckey, David Herbert
(86) International application number: PCT/US2006/039953
(87) International publication number: WO 2008/045069

(56) References cited:
- EP-A- 0 848 152
- WO-A-2005/021934
- WO-A-2005/026518
- WO-A-2006/059999
- US-A- 2 699 687
- US-A- 3 892 358
- US-A- 4 068 469
- US-A- 5 387 083
- US-A1- 2005 151 012
- US-A1- 2006 101 930

## Description

### BACKGROUND OF THE INVENTION

The present invention relates to a gas turbine engine, and more particularly to a turbofan gas turbine engine having a fan variable area nozzle structure within the fan nacelle thereof.

Conventional gas turbine engines include a fan section and a core engine with the fan section having a larger outer diameter than that of the core engine. The fan section and the core engine are disposed sequentially about a longitudinal axis and are enclosed in a nacelle. An annular path of primary airflow passes through the fan section and the core engine to generate primary thrust.

Combustion gases are discharged from the core engine through a core exhaust nozzle, and an annular fan flow, disposed radially outward of the primary airflow path, passes through the fan section and is discharged through an annular fan exhaust nozzle defined at least partially by a nacelle surrounding the core engine exits to generate fan thrust. A majority of propulsion thrust is provided by the pressurized fan air discharged through the fan exhaust nozzle, the remaining thrust provided from the combustion gases discharged through the core exhaust nozzle.

The fan nozzles of conventional gas turbine engines have fixed geometry. The fixed geometry fan nozzles must be suitable for take-off and landing conditions as well as for cruise conditions. However, the requirements for take-off and landing conditions are different from requirements for the cruise condition. Optimum performance of the engine may be achieved during different flight conditions of an aircraft by tailoring the fan exhaust nozzle for the specific flight regimes.

Some gas turbine engines have implemented fan variable area nozzles. The fan variable area nozzle provide a smaller fan exit nozzle diameter during cruise conditions and a larger fan exit nozzle diameter during take-off and landing conditions. The existing variable area nozzles typically utilize relatively complex mechanisms that increase engine weight to the extent that the increased fuel efficiency benefits gained from fan variable area nozzle are negated.

Accordingly, it is desirable to provide an effective, lightweight fan variable area nozzle for a gas turbine engine. A nacelle assembly having the features of the preamble of claim 1 is disclosed in US-A-3892358.

### SUMMARY OF THE INVENTION

The present invention provides a nacelle assembly as claimed in claim 1. In the described embodiment, the flaps are incorporated into the fan nacelle to define a trailing edge thereof.

The disclosed actuator system include a compact high power density electrochemical actuator (EMA). Each EMA articulates an associated flap or set of flaps between a converged position and a diverged position. The linkage system converts rotary motion of the electromechanical actuator into a linear motion to directly drive each flap. The compactness of the EMA readily facilitates mounting within the fan nacelle close to the relatively thin trailing edge thereof yet provides the significant power density required for FVAN power requirements.

The present invention therefore provides an effective, lightweight fan variable area nozzle for a gas turbine engine.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general perspective view an exemplary turbo fan engine embodiment for use with the present invention;
Figure 1B is a perspective partial fragmentary view of the engine;
Figure 1C is a rear view of the engine;
Figure 2A is a perspective partial phantom view of a section of the FVAN; and
Figure 2B is an expanded view of one flap assembly of the FVAN.

### DETAILED DESCRIPTION OF THE PREFERRED EMBODIMENT

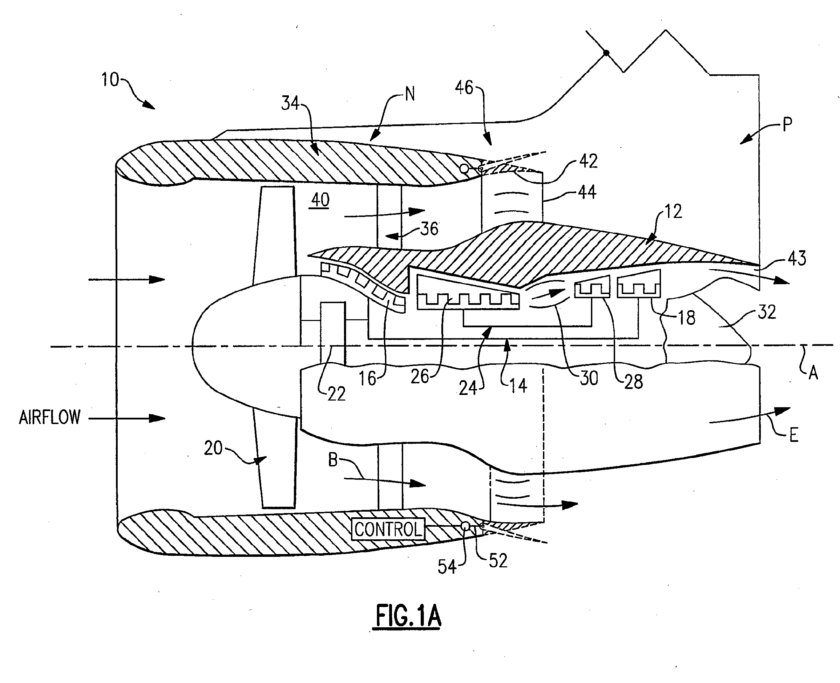

Figure 1A illustrates a general partial fragmentary schematic view of a gas turbofan engine 10 suspended from an engine pylon P within an engine nacelle assembly N as is typical of an aircraft designed for subsonic operation.

The turbofan engine 10 includes a core engine within a core nacelle 12 that houses a low spool 14 and high spool 24. The low spool 14 includes a low pressure compressor 16 and low pressure turbine 18. The low spool 14 drives a fan section 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 is preferably a high-bypass geared turbofan aircraft engine. Preferably, the engine 10 bypass ratio is greater than ten (10), the turbofan diameter is significantly larger than that of the low pressure compressor 16, and the low pressure turbine 18 has a pressure ratio that is greater than five (5). The gear train 22 is preferably an epicycle gear train such as a planetary gear system or other gear system with a gear reduction ratio of greater than 2.5. It should be understood, however, that the above parameters are only exemplary of a preferred geared turbofan engine and that the present invention is likewise applicable to other gas turbine engines.

Airflow enters a fan nacelle 34, which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with, respective, spools 24, 14 to rotationally drive the compressors 26, 16 and through the gear train 22, the fan section 20 in response to the expansion. A core engine exhaust E exits the core nacelle 12 through a core nozzle 43 defined between the core nacelle 12 and a tail cone 32.

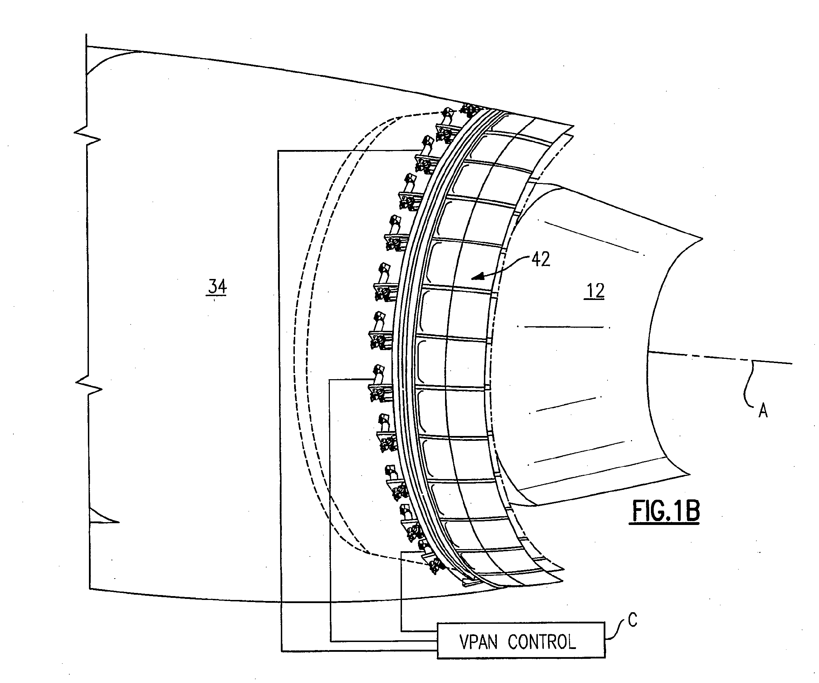

The core nacelle 12 is supported within the fan nacelle 34 by structure 36 often generically referred to as an upper and lower bifurcation. A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and is discharged from the engine 10 through a fan variable area nozzle (FVAN) 42 (also illustrated in Figure 1B) which defines a fan nozzle exit area 44 between the fan nacelle 34 and the core nacelle 12.

Thrust is a function of density, velocity, and area. One or more of these parameters can be manipulated to vary the amount and direction of thrust provided by the bypass flow B. The FVAN 42 changes the physical area and geometry to manipulate the thrust provided by the bypass flow B. However, it should be understood that the fan nozzle exit area 44 may be effectively altered by methods other than structural changes. Furthermore, it should be understood that effectively altering the fan nozzle exit area 44 need not be limited to physical locations approximate the end of the fan nacelle 34, but rather, may include the alteration of the bypass flow B at other locations.

The FVAN 42 defines the fan nozzle exit area 44 for discharging axially the fan bypass flow B pressurized by the upstream fan section 20 of the turbofan engine. A significant amount of thrust is provided by the bypass flow B due to the high bypass ratio. The fan section 20 of the engine 10 is preferably designed for a particular flight condition -- typically cruise at 0.8M and 35,000 feet. The fan section 20 includes fan blades which are designed at a particular fixed stagger angle for an efficient cruise condition. The FVAN 42 is operated to vary the fan nozzle exit area 44 to adjust fan bypass air flow such that the angle of attack or incidence on the fan blades are maintained close to design incidence at other flight conditions such as landing and takeoff, thus enabling optimized engine operation over a range of flight condition with respect to performance and other operational parameters such as noise levels. Preferably, the FVAN 42 defines a nominal converged position for the fan nozzle exit area 44 at cruise and climb conditions, but radially opens relative thereto to define a diverged position for other flight conditions. The FVAN 42 preferably provides an approximately 20% (twenty percent) change in the fan nozzle exit area 44. It should be understood that other arrangements as well as essentially infinite intermediate positions as well as thrust vectored positions in which some circumferential sectors of the FVAN 42 are converged relative to other diverged circumferential sectors are likewise usable with the present invention.

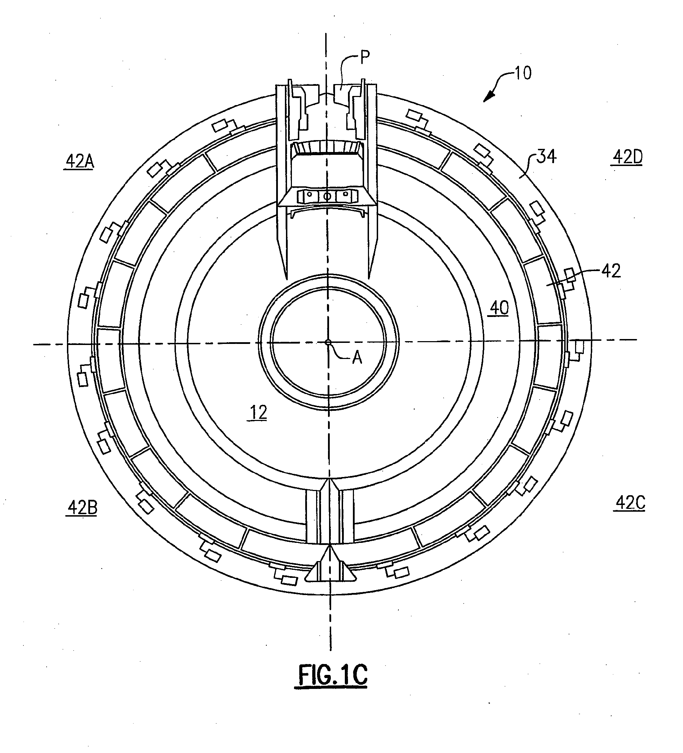

The FVAN 42 is preferably separated into at least four sectors 42A-42D (Figure 1 C) which are each independently adjustable to asymmetrically vary the fan nozzle exit area 44 to generate vectored thrust. It should be understood that although four sectors are illustrated, any number of sectors may alternatively be provided.

In operation, the FVAN 42 communicates with a controller C or the like to adjust the fan nozzle exit area 44 in a symmetrical and asymmetrical manner. Other control systems including an engine controller or aircraft flight control system may also be usable with the present invention. By adjusting the entire periphery of the FVAN 42 symmetrically in which all sectors are moved uniformly, thrust efficiency and fuel economy are maximized during each flight condition. By separately adjusting the circumferential sectors 42A-42D of the FVAN 42 to provide an asymmetrical fan nozzle exit area 44, engine bypass flow is selectively vectored to provide, for example only, trim balance, thrust controlled maneuvering, enhanced ground operations and short field performance.

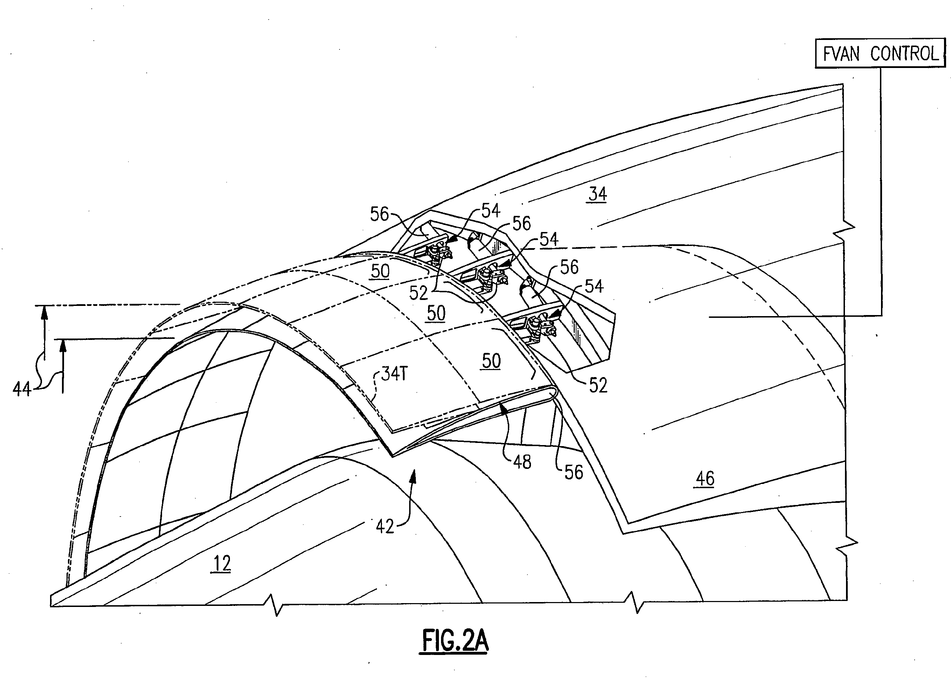

Referring to Figure 2A, the FVAN 42 generally includes a flap assembly 48 which define the fan nozzle exit area 44. The flaps 48 are incorporated into the end segment 46 of the fan nacelle 34 to define a trailing edge 34T thereof. The flap assembly 48 generally includes a multiple of flaps 50, each with a respective linkage system 52 and actuator system 54. Each flap 50 or group of flaps 50 are actuated directly through the linkage system 52 by the actuator system 54.

The actuator system 54 includes a compact high power density electromechanical actuator (EMA) 56 located within the end segment 46 of the fan nacelle 34. The EMA 56 preferably includes a brushless DC motor (BLDC) which drives a ball or roller screw through to provide an efficient balance between force, stroke and velocity.

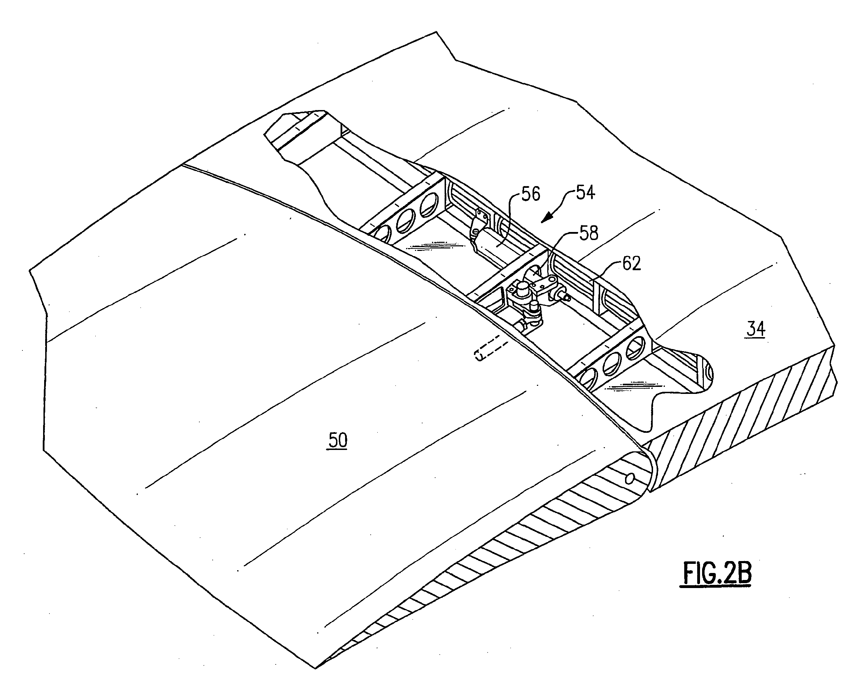

Each linkage system 52 is driven by each EMA 56 to pitch the flap 50 between a converged position and a diverged position. The linkage system 52 preferably includes a rotary-linear converter 58 such as a roller screw, a ball-screw, or other such rotary-linear conversion system which converts rotary motion of the electromechanical actuator 56 into a linear motion to drive the flap 50 and a crank system 60 such as a bell-crank assembly or the like which converts the direction of the linear motion transverse to the position of the EMA 56 (Figure 2B). It should be understood that various linkages will be usable with the present invention.

The EMAs 56 are mounted to a fixed component within the fan nacelle 34 such as spar 62 (Figure 2B) or the like. The compactness of the EMA 56 readily facilitates mounting within the fan nacelle 34 close to the relatively thin trailing edge 34T yet meet the primary flight control power requirements. Each EMA 56 preferably pitches an associated flap 50 or group of flaps 50 between the converged position and a diverged position (shown in phantom). It should be understood that although four sectors are illustrated, any number of sectors may alternatively or additionally be provided. It should be further understood that any number of flaps 50 may be controlled by a single EMA 56 through appropriate linkages, however, the one-to-one correlation provides the greatest asymmetric capability to the FVAN 42.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A nacelle assembly (N) for a gas turbine engine comprising:
a core nacelle (12) defined about an engine axis (A);
a fan nacelle (34) mounted at least partially around said core nacelle (12), said fan nacelle (34) comprising a fan variable area nozzle (42) with a multiple of flaps (50) which defines a fan nozzle exit area (44) between said fan nacelle (34) and said core nacelle (12) the multiple of flaps (50) incorporated into a end segment (40) of said fan nacelle (34) to defme a trailing edge (34T) of said fan nacelle;
a multiple of electromechanical actuators (56) located within the end segment (46) of said fan nacelle (34); and
a multiple of linkage systems (52);
each linkage system (52) comprising a rotary-linear converter (58) to convert a rotary motion from a said electromechanical actuator (56) to a linear motion to drive a respective one of or group of said multiple of flaps (50) to adjust said fan variable area nozzle; **characterised in that**:
said linear motion is in a direction circumferential to said engine axis (A) and **in**
**that** each said linkage system (52) further comprise a crank system (60) to convert the direction of said linear motion transfer to the position of the electromechanical actuator (56) to directly drive said one flap or said group of flaps (50).

2. The assembly as recited in claim 1, wherein said electromechanical actuator (56) includes a brushless DC motor.

3. The assembly as recited in claim 2, further comprising a roller screw which converts said rotary motion of each of said multiple of electromechanical actuators (56) into said linear motion to drive said fan variable area nozzle (44).

4. The assembly as recited in claim 2, further comprising a ball-screw which converts said rotary motion of each of said multiple of electromechanical actuators into said linear motion to drive said fan variable area nozzle (44).

5. The assembly as recited in any preceding claim, wherein each of said multiple of flaps (50) are separately driven by a respective electromechanical actuator (56) such that said fan variable area nozzle (44) is asymmetrically and symmetrically adjustable.

6. The assembly as recited in any of claims 1 to 4, wherein each of said multiple of flaps (50) are separately driven by a respective electromechanical actuator (56) such that said fan variable area nozzle (44) is symmetrically adjustable.

7. The assembly as recited in any of claims 1 to 4, wherein each of said multiple of flaps (50) are separately driven by a respective electromechanical actuator (56) such that said fan variable area nozzle (44) is asymmetrically adjustable.

8. The assembly as recited in any preceding claim wherein said crank system (60) is a bell crank assembly (60).

9. A gas turbine engine (10) comprising:
a core engine defined about an axis (A);
a gear system (22) driven by said core engine;
a fan (20) driven by said gear system (26) about said axis (A); and
a nacelle assembly (N) as claimed in any preceding claim, said core nacelle (12) of said nacelle assembly (N) being defined at least partially about said core engine.

## Patentansprüche

1. Gondelanordnung (N) für eine Gasturbinenmaschine aufweisend:
eine Kerngondel (12), die um eine Maschinenachse (A) definiert ist;
eine Bläsergondel (34), die wenigstens teilweise um die Kerngondel (12) angebracht ist, wobei die Bläsergondel (34) eine flächenvariierbare Bläserdüse (42) mit einer Mehrzahl von Klappen (50) aufweist, welche eine Bläserdüsenaustrittsfläche (44) zwischen der Bläsergondel (34) und der Kerngondel (12) definiert, wobei die Mehrzahl von Klappen (50) in ein Endsegment (40) der Bläsergondel (34) eingearbeitet sind, um eine Hinterkante (34T) der Bläsergondel zu definieren;
eine Mehrzahl von elektromechanischen Aktuatoren (56), die innerhalb des Endsegments (40) der Bläsergondel (34) angeordnet sind; und
eine Mehrzahl von Kopplungssystemen (52);
wobei jedes Kopplungssystem (52) einen drehbar-linearen Wandler (58) aufweist, um eine Drehbewegung von einem elektromechanischen Aktuator (56) in eine lineare Bewegung zu wandeln, um eine jeweilige eine oder Gruppe der Mehrzahl von Klappen (50) zu betätigen, um die flächenvariierbare Bläserdüse anzupassen; **dadurch gekennzeichnet, dass**
die lineare Bewegung in einer Richtung in Umfangsrichtung zu der Maschinenachse (A) ist und dadurch, dass jedes Kopplungssystem (52) weiterhin ein Kurbelsystem (60) aufweist, um die Richtung des linearen Bewegungstransfers zu der Position des elektromechanischen Aktuators (56) zu wandeln, um direkt die eine Klappe oder die Gruppe von Klappen (50) zu betätigen.

2. Anordnung nach Anspruch 1, wobei der elektromechanische Aktuator (56) einen bürstenlosen Gleichstrommotor umfasst.

3. Anordnung nach Anspruch 2, weiterhin aufweisend ein Rollengewinde, welches die Drehbewegung von jedem der Mehrzahl von elektromechanischen Aktuatoren (56) in eine lineare Bewegung wandelt, um die flächenvariierbare Bläserdüse (44) zu betätigen.

4. Anordnung nach Anspruch 2, weiterhin aufweisend ein Kugelgewinde, welches die Drehbewegung von jedem der Mehrzahl von elektromechanischen Aktuatoren in eine lineare Bewegung wandelt, um die flächenvariierbare Bläserdüse (44) zu betätigen.

5. Anordnung nach einem der vorherigen Ansprüche, wobei jede der Mehrzahl von Klappen (50) von einem entsprechenden elektromechanischen Aktuator (56) gesondert betätigt wird, so dass die flächenvariierbare Bläserdüse (44) asymmetrisch und symmetrisch anpassbar ist.

6. Anordnung nach einem der Ansprüche 1 bis 4, wobei jede der Mehrzahl von Klappen (50) von einem entsprechenden elektromechanischen Aktuator (56) gesondert betätigt wird, so dass die flächenvariierbare Bläserdüse (44) symmetrisch anpassbar ist.

7. Anordnung nach einem der Ansprüche 1 bis 4, wobei jede der Mehrzahl von Klappen (50) von einem entsprechenden elektromechanischen Aktuator (56) gesondert betätigt wird, so dass die flächenvariierbare Bläserdüse (44) asymmetrisch anpassbar ist.

8. Anordnung nach einem der vorherigen Ansprüche, wobei das Kurbelsystem (60) eine Hebelanordnung (60) ist.

9. Gasturbinenmaschine (10) aufweisend:
eine Kernmaschine, die um eine Achse (A) definiert ist;
ein Getriebe (22), das von der Kernmaschine angetrieben wird;
ein Bläser (20), der von dem Getriebe (22) um die Achse (A) angetrieben wird; und
eine Gondelanordnung (N) nach einem der vorherigen Ansprüche, wobei die Kerngondel (12) der Gondelanordnung (N) wenigstens teilweise um die Kernmaschine definiert ist.

## Revendications

1. Assemblage de nacelles (N) pour un moteur à
turbine à gaz, comprenant :
une nacelle de noyau (12) définie autour un axe (A) du moteur ;
une nacelle de soufflante (34) montée au moins partiellement autour de ladite nacelle de noyau (12), ladite nacelle de soufflante (34) comprenant une tuyère de section variable à soufflante (42) avec une pluralité de volets (50) qui définissent une section de sortie de tuyère à soufflante (44) entre ladite nacelle de soufflante (34) et ladite nacelle de noyau (12), la pluralité de volets (50) étant incorporée à un segment d'extrémité (40) de ladite nacelle de soufflante (34) pour définir un bord de fuite (34T) de ladite nacelle de soufflante ;
une pluralité d'actionneurs électromécaniques (56) situés dans le segment d'extrémité (46) de ladite nacelle de soufflante (34) ; et
une pluralité de systèmes de biellage (52) ; chaque système de biellage (52) comprenant un convertisseur rotatif-linéaire (58) pour convertir un mouvement rotatif issu d'un dit actionneur électromécanique (56) en un mouvement linéaire pour entraîner un respectif ou un groupe de ladite pluralité de volets (50) afin d'ajuster ladite tuyère de section variable à soufflante ; **caractérisé en ce que** :
ledit mouvement linéaire se fait dans une direction circonférentielle par rapport audit axe de moteur (A) et chaque dit système de biellage (52) comprend en outre un système à manivelle (60) pour convertir la direction dudit transfert de mouvement linéaire dans la position de l'actionneur électromécanique (56) afin d'entraîner directement ledit un volet ou ledit groupe de volets (50).

2. Assemblage selon la revendication 1, dans lequel ledit actionneur électromécanique (56) comprend un moteur CC sans balais.

3. Assemblage selon la revendication 2, comprenant en outre une vis galet qui convertit ledit mouvement rotatif de chacun de ladite pluralité d'actionneurs électromécaniques (56) en dit mouvement linéaire pour entraîner ladite tuyère de section variable à soufflante (44).

4. Assemblage selon la revendication 2, comprenant en outre une vis à billes qui convertit ledit mouvement rotatif de chacun de ladite pluralité d'actionneurs électromécaniques en dit mouvement linéaire pour entraîner ladite tuyère de section variable à soufflante (44).

5. Assemblage selon l'une quelconque des revendications précédentes, dans lequel chacun de ladite pluralité de volets (50) est séparément entraîné par un actionneur électromécanique respectif (56) de sorte que ladite tuyère de section variable à soufflante (44) soit ajustable au plan asymétrique et au plan symétrique.

6. Assemblage selon l'une quelconque des revendications 1 à 4, dans lequel chacun de ladite pluralité de volets (50) est séparément entraîné par un actionneur électromécanique respectif (56) de sorte que ladite tuyère de section variable à soufflante (44) soit ajustable au plan symétrique.

7. Assemblage selon l'une quelconque des revendications 1 à 4, dans lequel chacun de ladite pluralité de volets (50) est séparément entraîné par un actionneur électromécanique respectif (56) de sorte que ladite tuyère de section variable à soufflante (44) soit ajustable au plan asymétrique.

8. Assemblage selon l'une quelconque des revendications précédentes, dans lequel le système à manivelle (60) est un ensemble à genouillère (60).

9. Moteur à turbine à gaz (10), comprenant :
un générateur de gaz défini autour d'un axe (A) ;
un système d'engrenage (22) entraîné par ledit générateur de gaz ;
une soufflante (20) entraînée par ledit système d'engrenage (26) autour dudit axe (A) ; et
un assemblage de nacelles (N) selon l'une quelconque des revendications précédentes, ladite nacelle de noyau (12) dudit assemblage de nacelles (N) étant définie au moins en partie autour dudit générateur de gaz.
